# EUROPEAN PATENT APPLICATION

(11) **EP 0 999 028 A1**
(43) Date of publication of application: **10.05.2000**
(21) Application number: 99203589.9
(22) Date of filing: 01.11.1999
(51) Int. Cl.: B29C 45/16

(54) **Process and apparatus for making products from different thermoplastics**

(30) Priority: 05.11.1998 DE 19850949
(71) Applicant: Curver Lawn Comfort S.A., 4432 Alleur (BE)
(72) Inventor: Westerburgen, Josephus Petrus Maria, 6093 BT Heijthuijsen (NL); Keijzers, Franciscus Adrianus Maria, 4849 BH Dorst (NL)
(74) Representative: Krijgsman, Willem

(57) **Abstract**

A process for the production of a plastic product from at least first and second different thermoplastics including providing an injection mold with a plurality of initial chambers (25) that are separated from each other by a plurality of separating members (20) and injecting the first thermoplastic into these chambers to fill same and thereby form a plurality of first thermoplastic elements (24). The separating members (20) are then moved in the mold so as to form a secondary chamber (29) having the plurality of first elements (24) arranged therein and space (40) to accommodate further thermoplastic material. The second thermoplastic material is then injected into the secondary chamber so that the first elements are joined with the second thermoplastic in order to produce the product. In the preferred process, the initial chambers (25) are arranged in an alternating manner above and below a separation line (C) defined by the inner end surfaces of the separating devices (20) in their separating positions.

## Description

This invention concerns a process and an apparatus for producing a plastic product from at least two different thermoplastics and, in particular, apparatus and processes for injection molding the plastic product.

Processes and apparatus for the production of plastic products using two different thermoplastics are known in the plastic industry. For example, recent U.S. patent No. 5,472,655 issued December 5, 1995 to Fuji Photo Film Co., Ltd. describes a method and apparatus for molding casing halves of a cassette in which one or more windows in the casing half are permanently retained by the remaining portions thereof. In the method used to make the casing half, a first mold is provided, this mold including a first die and a movable die positioned in a first position. This first mold is filled with a first plastic to mold a first portion of the cassette. The movable die is then moved to a second position so that the movable die and a second die form a second mold having a configuration the same as that of the casing half. The second mold is then filled with a second plastic in regions thereof not occupied by the first portion in order to mold a second portion of the casing half.

U.S. patent No. 5,125,816 issued June 30, 1992 to Fuji Photo Film Co., Ltd. also describes a method and apparatus for molding a magnetic tape cassette in two colours in which a strong bonding force is provided between the two portions. A slide core, which is moved in and out of a primary molding cavity between the molding of the two portions of the article, is provided with a tubular passageway having an opening within the primary molding cavity. The core is fully inserted into the molding cavity to form the first portion, then partially withdrawn to form a secondary molding cavity in which the second portion is subsequently molded. After molding the first portion, an adhesive is injected through the tubular passage and along the edges of the first portion.

One disadvantage of some known systems for making a plastic product from two different thermoplastics is that the previously injected plastic material can be caused to leak out into undesirable areas of the mold because of the effective injection pressure of a second or subsequent plastic material being injected into the mold. Such leaking out of one plastic material can lead to an aesthetically unpleasant blurring of the contour between the two or more plastic materials.

It is an object of the present invention to provide an apparatus and a process for producing plastic products from at least two different thermoplastics, which apparatus and process consistently provide a clean contour between the two or more different thermoplastics following completion of the injection molding process.

It is a further object of the present invention to provide an apparatus and a process for producing plastic products from at least two different thermoplastics which are reliable and efficient and which can be manufactured or carried out at a reasonable cost.

According to a first aspect of the invention, a process for the production of a plastic product from at least first and second different thermoplastics includes providing an injection mold with a plurality of initial chambers that are separated from each other by a plurality of separating members and injecting the first thermoplastic into the initial chambers to fill same and thereby form a plurality of first thermoplastic elements. The separating members are then moved in the mold so as to form a secondary chamber having the plurality of first elements arranged therein and space to accommodate further thermoplastic material. At least the second thermoplastic is then injected into the secondary chamber in such a manner that the plurality of first elements are joined with the second thermoplastic in order to produce the plastic product.

In a preferred process, the initial chambers are arranged in an alternating manner above and below a separation line defined by inner end surfaces of the separating devices in their chamber separating position. The second thermoplastic after it is injected winds back and forth between the first elements when the first elements are viewed in transverse cross-section along a plane generally perpendicular to the inner end surfaces of the separating devices.

According to another aspect of the invention, a process for molding a plastic article using first and second different thermoplastics includes providing an injection mold with two closable mold halves and a plurality of separating members movably mounted in each mold half and arranged in a first position so as to form a plurality of initial chambers separated from each other by the separating members. A first thermoplastic is injected into the initial chambers to fill same and thereby form a plurality of first thermoplastic elements. The separating members are then moved in each mold half away from the separating members of the other mold half so as to form a secondary chamber having the plurality of first elements arranged therein and space to accommodate the second thermoplastic. The second thermoplastic is injected into the secondary chamber in such a manner that the first elements are joined with the second thermoplastic in order to produce the plastic article.

In a preferred form of this process, the separating members mounted in each mold half are rigidly connected to a movable supporting block located outside of the respective mold half.

According to a further aspect of the invention, an injection molding apparatus for molding a plastic article using at least first and second different thermoplastics includes an injection mold having two closable mold halves that together define a primary mold cavity. The apparatus also has supply conduits for introducing the different thermoplastics into the mold and a plurality of separating devices mounted in the mold and projecting into the primary mold cavity. The separation devices are movable along respective movement paths between a first molding position and a second molding position. In the first position, the separating device define a plurality of mold chambers separated from each other by the separating devices and adapted to receive the first thermoplastic in order to form a plurality of separate first plastic elements. In the second molding position, the separating devices define a larger mold chamber adapted to contain the first plastic elements and space for receiving at least the second thermoplastic which can be injected therein.

According to still another aspect of the invention, an injecting molding apparatus for molding a plastic article using different thermoplastics includes an injection mold having two closable mold halves that together define a mold cavity for molding the plastic article and supply conduits for introducing the different thermoplastics into the mold. The apparatus also has two supporting members located on opposite sides of the injection mold and each of these members is associated with a respective one of the mold halves and movable relative thereto. A set of spaced apart separating members are mounted on each supporting member and movable therewith. The separating members of each set extend through the associated mold half and are movable between a first molding position and a second molding position by means of their respective supporting member. In the first molding position, inner ends of the two sets of separating members are in mutual contact so as to form mold chambers separated from each other and adapted to receive one of the thermoplastics in order to form a plurality of plastic elements. In the second molding position, the inner ends of the two sets are separated to form a mold cavity which contains the plastic elements and space for receiving another different thermoplastic.

In the preferred form of the apparatus, the separating members are elongate, substantially flat slats and the separating members mounted on one of the supporting members are staggered in their position relative to the separating members mounted on the other of the supporting members.

By the sequential injection of different thermoplastics, namely first injecting one thermoplastic in the plurality of initial or smaller chambers and then injecting another thermoplastic in a single larger chamber, which contains the elements made from the first thermoplastic produced by the first injection step, the two thermoplastics cannot mix with each other. The result is a finished plastic product which is of good quality and which has a pleasing appearance with the lines between the two or more different thermoplastics well defined.

In the preferred form of the process and apparatus of the invention, the smaller initial chambers which are separated from one another during the initial injection step are arranged alternatively above and below a line of separation that is defined by the inner end surfaces of the separating devices in their chamber separating position. As a result, after the second injection step, the injected second thermoplastic when viewed in cross-section winds or extends in a meandering manner around the plastic elements formed by the first thermoplastic. Accordingly, in this version of the process, the produced plastic product has the visual appearance of a single web strip at the boundry line. The finished appearance of the plastic product is similar to that of a product woven from two different materials..

In the molding process described herein, it is possible to use two or more thermoplastics that either have different hardnesses or different colours or both. Once thermoplastics having different hardnesses are used, it becomes possible to produce a specific elasticity or specific elasticities in the plastic product so that the product will have desirable characteristics when used. Furthermore, if the two or more thermoplastics have different colours, it is then possible to produce plastic products having various colour patterns.

The process and apparatus of the invention make it possible to provide or arrange the initial chambers into which the first thermoplastic is injected so that they are separated from each other along the contour line that corresponds to the desired contour of the plastic product. This can be used to advantage for example in the production of backrests or armrests of plastic seats or chairs.

If the finished plastic product is to have a relatively large surface having the appearance of a web structure, this can be achieved with the present process by separating the smaller initial chambers from each other in a checkerboard-like manner. After the injection of the first thermoplastic and then the movement of the separating members to form a larger secondary chamber, a second thermoplastic can then be injected. In the resulting product, the two or more thermoplastics weave through each other so as to form a surface having the appearance of a web structure or a weave pattern.

An even larger variation of the elasticity in the final plastic product or in the coloration can be achieved with the process and apparatus of the invention by injecting a plurality of different thermoplastics, these thermoplastics having varying hardnesses and/or varying colours. A variety of elastomers can be employed in the processes of the invention.

As described herein, the present invention provides an injection molding process for the protection of a plastic product from at least two different thermoplastic materials which uses technically simple apparatus while at the same time providing a reliable and pleasing contour between the at least two different thermoplastic materials when the process is complete.

In one preferred form of the injection molding apparatus of the invention, the separating devices are in the form of four-sided slats, each of which is connected to one of two main connecting blocks located outside the mold halves. The slats are movable towards each other by these two blocks to a point of mutual contact and are also movable away from each other by these blocks. With this preferred arrangement it is possible to simultaneously move a plurality of four-sided slats and to create right angled chambers which can be used to create a band structure or a desired texture or pattern in the finished plastic product.

In a preferred embodiment, the four-sided slats are spaced from each other so as to form regular spaces or interstices between the slats and the slats mounted on each block are arranged so that the slats of one block are positioned opposite the spaces between the slats of the other block. Furthermore, the spaces or interstices between adjacent slats are smaller than the thicknesses of the slats taken in a direction perpendicular to the two large sides of the slats.

With the process of the invention, it is also possible to define the so-called gauge of the second injected thermoplastic. In a preferred form of the apparatus of the invention, the main connecting blocks are moved by a pusher or slider mechanism which is connected to a hydraulic cylinder capable of moving same.

In the present apparatus it is also possible to arrange the main blocks and their slider mechanisms in an opposing manner. The slider mechanisms are provided with sloping surfaces that contact each other. Because of the slope, a relative horizontal movement of one slider member will cause a vertical movement of its corresponding block. With this arrangement, the relative movement of the four sided slats is greatly simplified.

In order to make the production of a variety of plastic products possible with the invention, preferably the contact lines of the two sets of four-sided slats are arranged so that they correspond to the desired contour line of the finished plastic product.

If the plastic molder wishes to produce a plastic product having a large surface area that displays a web structure or pattern, then it is possible to construct the separation devices or the slats so that they provide a checkerboard arrangement or, in other words, a checkerboard arrangement produced by the initial small chambers. Also, if the injection molding process of the invention is controlled by means of a computer, it is possible to accelerate and to simplify the production of the plastic products because the various shapes or contours of the plastic products can be stored in the memory of the computer. In the preferred system, the computer is programmable so that new shapes for the plastic products can readily be programmed in the computer.

Further features and advantages will be apparent from the following detailed description of a preferred embodiment of the invention taken in conjunction with the accompanying drawings.
Figure 1A is a partial sectional view of an injection molding apparatus constructed in accordance with the invention, this view being taken after a first thermoplastic has been injected into the mold;
Figure 1B is a detail view of the circled region of the mold indicated in Figure 1A, this enlarged view being taken along the separation line of the two mold halves;
Figure 2A is a partial sectional view of the injection molding apparatus, this view being taken after the injection of a second thermoplastic into the mold cavity;
Figure 2B is an enlarged partial sectional view taken in the circled area of Figure 2A, this view being taken along the separation line of the two mold halves;
Figure 3 is an enlarged cross-sectional view taken along the separation line between the two mold halves with the separating members or slats of the two mold halves shown in the second molding position where they are withdrawn from opposing separation members;
Figure 4 is an enlarged sectional view similar to Figure 3 but showing the separating members or slats moved inwardly to a first molding position;
Figure 5 is another enlarged cross-sectional view similar to Figure 4 but showing a first thermoplastic material injected into separated molding chambers;
Figure 6 is an enlarged cross-sectional view similar to Figure 3 but showing the presence of the molded plastic elements made of the first thermoplastic;
Figure 7 shows an enlarged detail similar to Figure 6 but this view is taken after the injection of the second thermoplastic; and
Figure 8 is a partial cross-sectional view of part of the injection molding apparatus, this view illustrating the relationship between a main support block and a slider mechanism capable of moving the support block upwardly or downwardly.

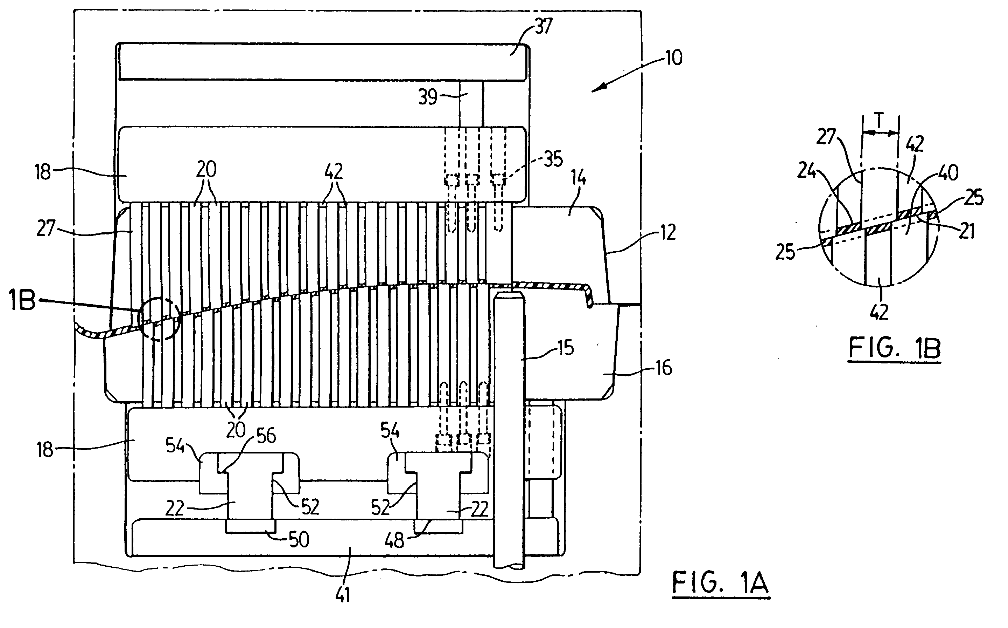

Figures 1 through 8 illustrate an injection mold 10 for molding a plastic article using at least two different thermoplastics as well as a process for the production of such an article made up of two different thermoplastics. The illustrated injection molding apparatus 10 has an inset or injection mold having two closable mold halves 14 and 16 that together define a mold cavity. As is well known per se in the art, the molding apparatus includes supply conduits, such as conduit 15, for introducing the two or more different thermoplastics into the mold. As the use of such supply conduits is well known in the plastic molding art, a detailed description thereof is deemed unnecessary herein.

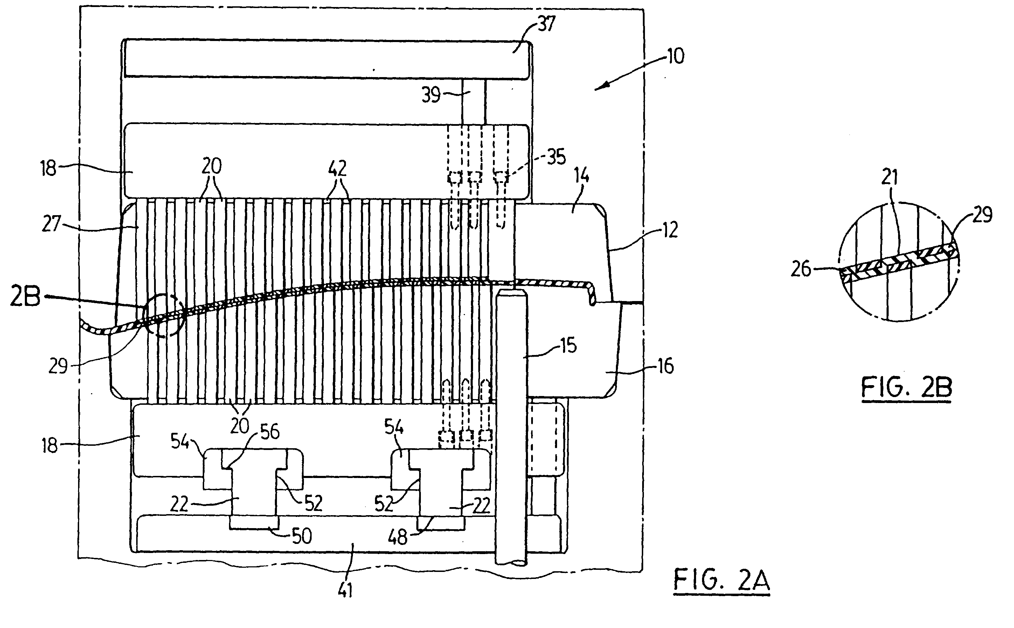

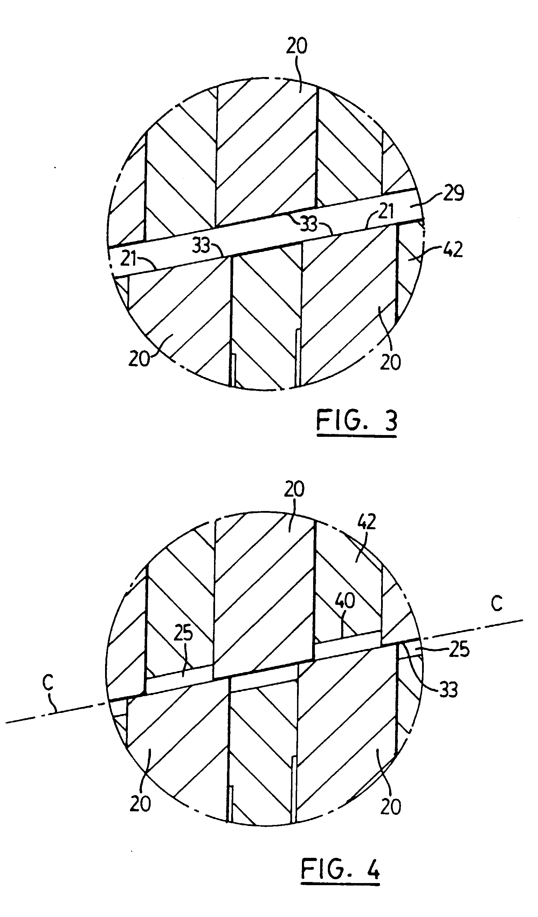

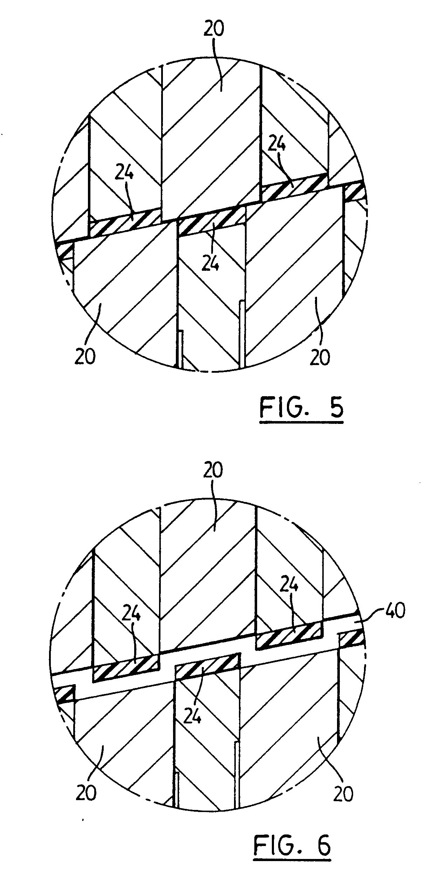

Arranged on the respective outer surfaces of the two mold halves 14, 16 are two main connecting blocks 18 which are movable inwardly towards the center of the mold or outwardly. Located above the upper block 18 of the mold 10 is a rear plate 37 and extending between the plate 37 and the block 18 is a guiding rod 39. There can be several rods 39 but only one is shown for ease of illustration. The rods 39 guide the up and down movement of the upper half of the mold and they are supported by the rear plate 37. A plurality of separating devices 20 are mounted in the mold and project into the main mold cavity. As explained in more detail hereinafter, these separating devices are movable along respective movement paths between a first molding position and a second molding position. The first molding position is illustrated in Figures 1B and 4 while the second molding position is illustrated in Figures 2b and 3 of the drawings. The separating devices 20 are rigidly mounted on the two connecting blocks 18. In the preferred illustrated apparatus, the connecting devices comprise four-sided slats which are evenly spaced apart and which are parallel to one another. It will be appreciated that suitable slots are formed in each of the mold halves 14 and 16 to receive the generally planar separating devices 20. The separating devices can exhibit a variety of outer contours (that is the contour along their inner end surface 21) depending upon the particular shape or pattern to be produced in the finished plastic product. Although the illustrated four-sided slats are regularly spaced from each other, it is possible that in some versions of the injection molding apparatus of the invention requiring plastics elements of different widths, the slats 20 could be spaced from adjacent slats an amount which varies between slats. Bolts 35 can be used to detachably mount the slats 20 to their respective blocks 20.

As will be clear from Figures 1B and 4 of the drawings, the set of slats mounted on each of the blocks 18 are mounted so as to lie opposite spaces or voids 40 formed between the slats 20 mounted on the other block 18. The tops or bottoms of these spaces or voids are bounded by fixed mold plates 42. Preferably each slat 20 on one block 18 has a width or thickness indicated at T in Figure 1B which is larger than the width or thickness of the opposing space 40 formed between two of the slats mounted on the other block. Thus, with reference to the apparatus shown in Figure 1A, the upper slats 20 connected to the upper block 18 are positioned so that they are opposite voids 40 formed between the lower slats 20 and vis versa. It will be appreciated that each set of slats 20 mounted on one of the blocks 18 is movable towards the slats mounted on the other of the blocks 18 so as to bring the slats or separating devices into mutual contact. After the injection of the first thermoplastic material into the voids 40, each set of slats 20 can then be moved away from the slats mounted on the other of the blocks 18.

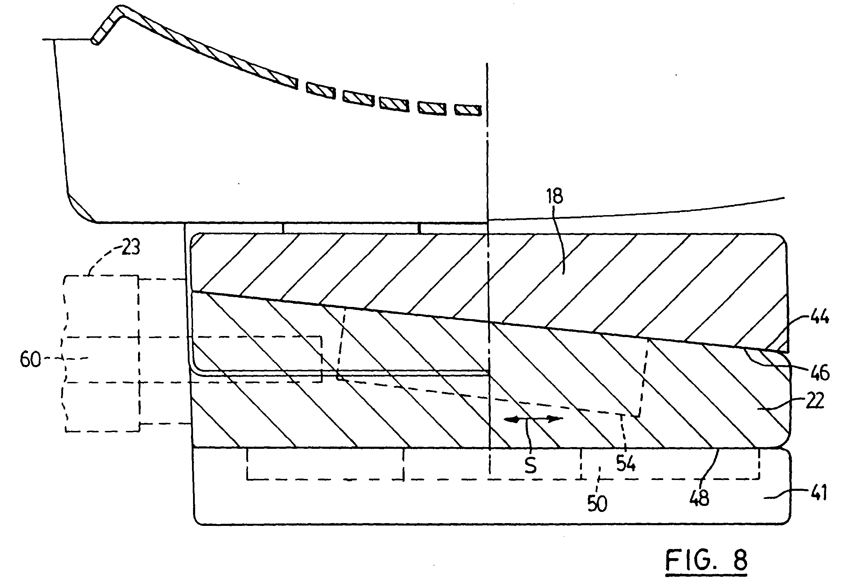

In a particularly preferred molding apparatus, there are slider mechanisms 22 for moving the two connecting blocks 18 inwardly or outwardly as required along with their respective separating devices 20. Each slider mechanism can be connected to a piston rod 60 of a hydraulic cylinder 23 (see Figure 8) which is capable of moving the sliding mechanism 22. With this arrangement the stroke movement of each hydraulic cylinder (that is one for the upper block 18 and one for the lower block) is converted to the desired vertical movement of the slats 20. A particular preferred arrangement for the slider mechanism is illustrated in Figure 8 which shows the cooperation between one of the blocks 18 and its respective slider mechanism. As illustrated, the main support block 18 is formed with a sloping outer surfaces 44 that slidingly engages a sloping engagement surface 46 of the respective slider mechanism 22. It will thus be seen that movement of the sliding mechanism in the direction indicated by the arrow S, which is perpendicular to the direction of movement of the respective main block 18, causes the main block 18 to move towards or away from the injection mold 10. In other words, in the usual case illustrated in the drawings, a horizontal movement of the tapered slider mechanism 22 leads to a vertical movement of the respective main block 18 and the attached slats. As illustrated in Figure 8, both the block 18 and the slider mechanism 22 can be considered tapered members that are wider at one end than at the other end. The slider mechanism 22 is movable back and forth on a horizontal support surface 48. The surface 48 can be formed, if desired, by a series of support blocks 50 having a low friction upper surface, the blocks 50 being mounted in rear plate 41 of the lower half of the mold. The sliding mechanisms 22 can be movable in straight slots 52 formed in the respective block 18. The slot 52 can be bounded on either side by means of guide strips 54 rigidly mounted in the side of the block 18 which is opposite the slats as shown in Figure 1A. These guide strips each have a L-shaped cross-section and thus each forms a shoulder at 56. Because the upper portion of the preferred sliding mechanism is T-shaped, the sliding mechanism is held between the two guide strips along which it is free to slide.

As can be clearly seen from Figures 1A and 2A, the slats 20 can be made so that their length as measured in the direction of movement of the slats varies. Because of this variation, the contact line where the slats on one side meet the set of slats on the other side can have a specific desired contour. In the illustrated embodiment, the contour formed by these slats has the contour of a backrest for a plastic chair. In a normal case where these slats vary in length, the variation will be gradual and not abrupt. In the case of some plastic products which require no curved contour but only a flat surface, there may be no variation in the length of the slats.

Although not shown in the drawings, it is possible to construct the slats 20 so that the initial chambers formed when the slats are in the position illustrated in Figures 1B and 4 are arranged in a checkerboard manner in the injection mold. When slats of this type are used, after the second injection step takes place, the two different thermoplastics weave through each other and form a weblike or weave-like structure which can extend over a relatively large surface area. The same principles can be employed to produce weblike structures comprising more than two types of thermoplastics.

As shown in Figures 1A and 1B, the injection mold 10 has its mold cavity closed and the four sided slats 20 are in their first position or extended position where the slats in one of the mold halves 14 or 16 along the edges of their inner end surfaces contact the edge areas of the inner end surfaces of the opposing slats. In this first molding position, the slats or separating members form a plurality of initial chambers located at 25 that are separated from each other by the slats. The inward and outward movement of the slats 20 is guided by means of holes or slots 27 having a cross-sectional shape corresponding closely to that of the respective slats and formed in the mold half 14 or 16. It will be understood that the inner surfaces of the mold halves 14, 16 which face each other do not contact one another even when the mold cavity 12 is closed so that when the mold cavity is seen in cross-section, an elongate hollow space 29 is provided when the slats 20 are moved outwardly to their second, retracted position. This thin, elongate hollow space can be seen in Figures 2B and 3.

As shown in Figure 1A and 1B, a first thermoplastic 24 is injected into the initial chambers formed by the slats 20. In the illustrated preferred injection mold, the slats 20 on one of the connecting blocks 18 or 20 meet the slats on the other connecting block approximately at the longitudinal centerline of the thin elongate mold cavity 12 and thus the initial chambers 25 are arranged in an alternating manner above and below this centerline (which is also a separation line) defined by the inner end surfaces of the slats. Thus, the first thermoplastic elements formed by the initial injection into these cavities are also arranged in an alternating manner above and below the longitudinal centerline.

Figures 2A and 2B illustrate the slats 20 after they have been moved outwardly so as to form a secondary chamber which contains the first thermoplastic elements that have already been formed. After this outward movement, a second thermoplastic 26 can be injected into the secondary chamber and, in the illustrated mold arrangement, this second thermoplastic meanders or winds back and forth between the first thermoplastic elements 24 when the latter are viewed in transverse cross-section (shown in Figure 2A).

It will be appreciated that it is possible to control the injection mold 10 by means of a computer, the construction of which is well known in the art. The computer is operatively connected to the injection mold and programmed to operate and control same. Preferably the computer is freely programmable so that its software program can be changed when required for molding different plastic articles.

Reference will now be made to Figures 3 to 7 which illustrate an injection process for the production of a plastic product consisting of at least two differing thermoplastics. Figure 3 is an enlarged partial cross-section illustrating the mold chamber 12 in the closed position with the slats 20 in their second, retracted position. In this position, the mold cavity 29 is completely empty and able to receive thermoplastic material to be injected. Then, since the injection mold 10 is to be used in the production of a plastic article having a web structure that includes bands of thermoplastic elements, the slats 20 are moved inwardly towards the slats on the opposite side of the mold cavity until their end surfaces 33 contact at the lateral edges thereof as illustrated in the enlarged partial cross-section of Figure 4. Since the slats are movably guided in corresponding openings or slots within their respective molds halves 14 and 16, the extended slats form a plurality of the initial chambers 25 in combination with the opposing mold halves sections 14 and 16. The chambers 25 are provided along the central contact line indicated at C in Figure 4, which is where the slats on each side meet and the chambers are arranged in an alternating manner above and below this contact or separation line. With the slats in this position, the first thermoplastic is injected into these initial chambers. The injected first thermoplastic is shown in Figure 5.

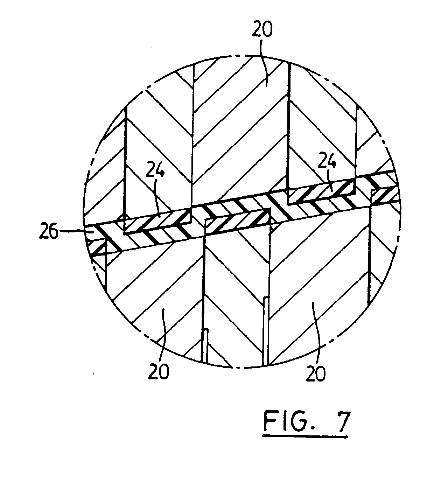

Subsequently the slats 20 are moved outwardly again to their retracted position as shown in Figure 6. In this position, the first thermoplastic elements 24 remain adhered to the inner surfaces of the mold halves 14 and 16 located between the slats 20. It can also be seen from Figure 6 that by retracting the slats 20, a hollow space 40 is produced which, when viewed in the cross-section shown in Figure 6, meanders back and forth around the thermoplastic elements 24. In this hollow space 40, a second thermoplastic material 26 is injected as shown in Figure 7. This second thermoplastic 26 then winds back and forth or meanders around the first thermoplastic elements 24 when these elements are seen in cross-section. If only two thermoplastics are being used in the production of the plastic article, the injection process is then completed. After a certain release time to enable the plastic to properly set and harden, the mold cavity 12 is opened and the plastic product can be removed.

If the thermoplastics 24 and 26 are of varying hardnesses, the plastic molder can use this fact to influence the elasticity of the finished plastic product. Additionally, or alternatively, it is also possible to employ two or more thermoplastics of different colours so that the web structure formed by the process in the described apparatus is more clearly recognizable and defined.

Although not illustrated in the drawings, it is possible to construct or make the slats 20 so as to provide mold chambers that are positioned in a checkerboard manner relative to one another. In this way, a plastic product such as a backrest for a plastic chair can be produced in which the two plastic materials weave through each other forming a type of web structure.

It is also possible to employ the present apparatus and molding process for the injection of a plurality of different types of elastomers which can have differing hardnesses and/or different colours. In particular, it is possible in the process of the invention to use three or more different thermoplastics which are injected at different stages of the molding process.

It will be noted that in the illustrated preferred molding apparatus there are at least five separating members or slats in each set or arranged in each mold half and the separating members in each half are substantially equal in width measured in a longitudinal direction of the mold cavity.

It will be appreciated by those skilled in this art that various modifications and changes can be made to the apparatus and process as described herein without departing from the spirit and scope of this invention. Accordingly all such modifications and changes as fall within the scope of the appended claims are intended to be part of this invention.

## Claims

1. A process for production of a plastic product from at least first and second different thermoplastics, said process comprising:
(a) providing an injection mold with a plurality of initial chambers that are separated from each other by a plurality of separating members;
(b) injecting the first thermoplastic into said initial chambers to fill same and thereby form a plurality of first thermoplastic elements;
(c) moving said separating members in said mold so as to form a secondary chamber having said plurality of first elements arranged therein and space to accommodate further thermoplastic material; and
(d) injecting at least said second thermoplastic into said secondary chamber in such a manner that said plurality of first elements are joined with at least said second thermoplastic in order to produce said plastic product.

2. A process according to claim 1 wherein said initial chambers are arranged in an alternating manner above and below a separation line defined by inner end surfaces of said separating members in their chamber separating position, said second thermoplastic after the injection of step (d) winding back and forth between said first elements when said first elements are viewed in transverse cross-section along a plane generally perpendicular to said inner end surfaces.

3. A process according to claim 1 wherein said at least first and second thermoplastics have different hardnesses.

4. A process according to claims 1 wherein said at least first and second thermoplastics have different colors.

5. A process according to claim 2 wherein said initial chambers that are separated from each other are arranged along a contour line suitable for production of said plastic product.

6. A process according to claim 1 wherein said initial chambers that are separated from each other are arranged in a checkerboard manner in said injection mold whereby, after the injection of step (d), the different thermoplastics weave through each other and form a web like structure.

7. A process according to claim 1 wherein three or more different thermoplastics are injected into said mold to form said plastic product.

8. A process according to claim 1 wherein said different thermoplastics are different elastomers.

9. A process for molding a plastic article using first and second different thermoplastics, said process comprising:
(a) providing an injection mold with two closable mold halves and a plurality of separating members movably mounted in each mold half and arranged in a first position so as to form a plurality of initial chambers separated from each other by said separating members;
(b) injecting a first thermoplastic into said initial chambers to fill same and thereby forming a plurality of first thermoplastic elements;
(c) moving said separating members in each mold half away from the separating members of the other mold half so as to form a secondary chamber having said plurality of first elements arranged therein and space to accommodate the second thermoplastic; and
(d) injecting said second thermoplastic into said secondary chamber in such a manner that said first elements are joined with said second thermoplastic in order to produce said plastic article.

10. A process according to claim 9 wherein the separating members mounted in each mold half are rigidly connected to a movable supporting block located outside of the respective mold half.

11. A process according to claim 10 wherein said separating members for each mold half comprise a plurality of substantially planar slats that are parallel to one another and are regularly spaced apart from each other.

12. A process according to claim 11 wherein the slats mounted in one of the mold halves are staggered relative to the slats mounted in the other of the mold halves so that inner ends of the slats of each mold half cover inner ends of the spaces formed between the slats of the other mold half when said initial chambers are formed.

13. A process according to claim 9 wherein said initial chambers are arranged in alternating manner above and below a separation line defined by inner end surfaces of said separating members in their first position, said second thermoplastic after the injection of step (d) winding back and forth between said first thermoplastic elements when the latter are viewed in transverse cross-section.

14. A process according to claim 13 wherein said first and second thermoplastics have different colors.

15. A process according to claim 9 wherein said initial chambers are arranged along a curved contour line in order to provide a desired curvature to said plastic article.

16. An injection molding apparatus for molding a plastic article using at least first and second different thermoplastics, said apparatus comprising:
an injection mold having two closable mold halves that together define a main mold cavity and supply conduits for introducing said different thermoplastics into said mold; and
a plurality of separating devices mounted in said mold and projecting into said main mold cavity, said separating devices being movable along respective movement paths between a first molding position and a second molding position,
wherein, in said first molding position, the separating devices define a plurality of mold chambers separated from each other by the separating devices and adapted to receive said first thermoplastic in order to form a plurality of separate first plastic elements and, in said second molding position, said separating devices define a larger mold chamber adapted to contain said first plastic elements and space for receiving at least said second thermoplastic which can be injected therein.

17. An injection molding apparatus according to claim 16 including two main connecting blocks located outside said mold halves, said separating devices being mounted on said connecting blocks and comprising four-sided slats, wherein the separating devices mounted on one of said blocks are movable towards the separating devices mounted on the other of said blocks so as to bring the separating devices of the two blocks into mutual contact and are also movable away from the separating devices mounted on the other of said blocks.

18. An injection molding apparatus according to claim 17 wherein the slats mounted on each block are spaced apart from each other so as to form regular spaces between them, the slats mounted on each block are mounted so as to be opposite the spaces formed between the slats mounted on the other block, and each slat on one block has a width which is larger than the width of the opposing space formed between two of the slats mounted on the other block.

19. An injection molding apparatus according to claim 17 including slider mechanisms for moving the two connecting blocks and their respective separating devices towards or away from the injection mold, each slider mechanism being connected to a hydraulic cylinder capable of moving the sliding mechanism.

20. An injection molding apparatus according to claim 19 wherein each connecting block is formed with a sloping outer surface that slidingly engages a sloping engagement surface of a respective one of the slider mechanisms whereby movement of each sliding mechanism in a direction perpendicular to the direction of movement of its respective main connecting block causes this main connecting block to move towards or away from the injection mold.

21. An injection molding apparatus according to claim 18 wherein the four-sided slats mounted on one connecting block and the four-sided slats of the other connecting block are brought into mutual contact along a line of contact that follows a contour line of the plastic article to be molded.

22. An injection molding apparatus according to claim 16 wherein said separating devices are arranged and constructed to provide said mold chambers so that they are positioned in a checkerboard manner relative to one another.

23. An injection molding apparatus according to claim 17 wherein said four-sided slats are arranged and constructed to provide said mold chambers so that they are positioned in a checkerboard manner relative to one another.

24. An injection molding apparatus according to claims 16 including a computer operatively connected to said injection mold and programmed to operate and control same.

25. An injection molding apparatus according to claim 24 wherein said computer is freely programmable with a software program that can be changed when required for molding different plastic articles.

26. An injection molding apparatus for molding a plastic article using different thermoplastics, said apparatus comprising:
an injection mold having two closable mold halves that together define a mold cavity for molding said plastic article and supply conduits for introducing said different thermoplastics into said mold;
two supporting members located on opposite sides of said injection mold, each supporting member being associated with a respective one of said mold halves and movable relative thereto; and
a set of spaced-apart separating members mounted on each supporting member and movable therewith, the separating members of each set extending through the associated mold half and movable between a first molding position and a second molding position by means of their respective supporting member, wherein, in said first molding position, inner ends of the two sets of separating members are in mutual contact so as to form mold chambers separated from each other and adapted to receive one of said thermoplastics in order to form a plurality of plastic elements, and in said second molding position, said inner ends of the two sets are separated to form said mold cavity which contains said plastic elements and space for receiving another, different thermoplastic.

27. An injection molding apparatus according to claim 26 wherein said separating members are elongate, substantially flat slats and the separating members mounted on one of the supporting members are staggered in their position relative to the separating members mounted on the other of the supporting members so that the inner ends of one set in the first molding position extend across the spaces separating the separating members of the other set.

28. An injection molding apparatus according to claim 27 wherein said slats of each set are evenly spaced apart and are parallel to one another.

29. An injection molding apparatus according to claim 27 including hydraulically powered means for moving each of said supporting members towards or away from its respective mold half.

30. Art injection molding apparatus according to claim 27 wherein said mold cavity has a longitudinal centreline and, in the first molding position, said inner ends of the two sets meet along said centreline and said mold chambers are arranged in alternating fashion above and below said centreline.

31. An injection molding apparatus according to claim 26 wherein adjacent separating members of each set are spaced apart a predetermined distance that is less than the width of each separating member measured in the same direction.
